# EUROPEAN PATENT APPLICATION

(11) **EP 0 671 676 A1**
(43) Date of publication of application: **13.09.1995**
(21) Application number: 95200460.4
(22) Date of filing: 24.02.1995
(51) Int. Cl.: G05B 19/23

(54) **Electronic control system for roller blinds and shutters**

(30) Priority: 08.03.1994 IT MI940415
(71) Applicant: DELTRON LTD., Santon, Isle of Man (GB)
(72) Inventor: Maffioli, Giampaolo, I-30126 Venezia - Lido (IT)
(74) Representative: Mittler, Enrico

(57) **Abstract**

The control system comprises an encoder (20) related to the winding drum of the shutter and is constructed in such a way as to generate sequences of pulses (I17, I18) indicating both the angle and the direction of rotation of the drum (3) and a control pushbutton panel (2, 2M, 2S) including a microprocessor (32) which at each movement of opening or closure counts the pulses (I17, I18) of said sequences so as to subtract, from the pulses relating to the rotation commanded, any pulses relating to a contrary rotation, enters in a memory (34) the result of said count and at the next movement of opening or closure compares it with a prememorised count indicating a required position of opening or closure in order to command correspondingly said subsequent movement for a stroke which depends on the result of said comparison. The system can be produced in the form of a closed loop network comprising a plurality of control pushbutton panels (2, 2M, 2S) for the same number of roller blinds or shutters; in this case one of the control pushbutton panels is of the MASTER type (2M) with the possibility of simultaneous and timed control of the other pushbutton panels, which are of the SLAVE type (2S).

## Description

The present invention relates to an electronic control system for roller blinds and shutters, in particular roller shutters and sun shades, also of the roller type.

For the sake of simplicity reference will henceforth be made to roller shutters alone, it being understood however that any consideration also applies to roller blinds.

In recent years there has been an increasing tendency to use electric controls for the movements of opening and closure of roller shutters, particularly metal types, which are more resistant to breakage but also much heavier than those in wood or plastic.

A reversible electric ratiomotor of suitable speed and power is therefore installed inside the rotary drum whereon the shutter is wound and a pair of pushbutton electric switches are provided to allow the user to control from the ground the actuation of the ratiomotor in one direction or the other for the corresponding movement of opening or closure of the shutter.

The movement of opening or closure was originally ended by simply releasing the pushbutton actuated, but was then automated by the use of suitable limit switches connected to the winding drum.

Use was then made of electronic control of movement, achieved by inserting in the winding drum an encoder with rotary perforated disk and fixed reader which generates a pulse at each predetermined angle of rotation of the drum and by providing also a control pushbutton panel with a memory, which by collecting and counting the pulses transmitted by the encoder allows first the required limit switch positions to be memorised and then the movements of opening and closure of the shutter to be commanded in repetition as far as the aforementioned limit switch positions.

The electronic control with rotary perforated disk and fixed reader encoder has been found to be effective but subject to errors caused by the inevitable inertia of the shutter at the end of the movement of opening and the possibility of a further fall of the shutter as it settles.

In this case, the open shutter takes up a position of opening which differs from the predefined one, while the encoder, which is not able to distinguish between one direction of rotation and the other, continues in the meantime to emit pulses as if the movement of the shutter were continuing in the direction of opening alone. The count of the pulses at the end of the opening movement does not correspond therefore to the position effectively assumed by the shutter and the subsequent movement of closure of the shutter itself leads the latter to take up a different closure position from the one required, definitively disrupting the entire programming.

The object of the present invention is that of providing an electronic control system for roller shutters, which permits automatic compensation of any positioning errors at the end of the opening movement and if necessary also that of closure.

In accordance with the invention this object is achieved with a control system comprising an encoder connected to the winding drum of the shutter in order to emit a sequence of pulses indicating the angle of rotation of the drum between a closure position and an opening position of the shutter and a control pushbutton panel with memory suitable for receiving and counting the pulses emitted by the encoder to define and memorise required limit switch positions for subsequent movements of opening and closure of the shutter, characterised in that the encoder is made in such a way as to generate sequences of pulses indicating both the angle and the direction of rotation of the drum and the control pushbutton comprises a microprocessor which at each movement of opening or closure of the shutter counts the pulses of said sequences in such a way as to subtract, from the pulses relating to the rotation commanded, any pulses relating to a contrary rotation, enters in the memory the result of said count and at the subsequent movement of closure or opening compares it with a prememorised count indicating a required limit switch position in order to command correspondingly said subsequent movement for a stroke which depends on the result of said comparison.

In this way, even if the shutter is arranged incorrectly in a different opening or closure position from the one required, at the start of the subsequent movement of closure or opening the error is automatically compensated and at the end thereof the shutter is arranged in the correct position as if the previous error had never occurred.

This is clearly of considerable importance when the shutters are numerous, such as for example in the case of an office building of an industrial complex, where any errors would necessarily entail long and annoying repositioning work.

These and other features of the present invention will be made clearer from the following detailed description of its possible embodiment illustrated by way of example in the accompanying drawings, in which:
Figure 1 shows schematically a window fitted with a roller shutter with the electronic control system according to the present invention;
Figure 2 shows in axial section one end of the winding drum of the shutter, including an encoder able to supply sequences of pulses indicating both the angle and the direction of rotation of the drum;
Figure 3 shows said end of the drum in a cross section along line III-III of Figure 2;
Figure 4 shows the internal block diagram of the control pushbutton panel;
Figure 5 shows the basic working diagram of the microprocessor contained in said control pushbutton panel;
Figure 6 shows a front view of a first type of control pushbutton panel;
Figure 7 shows a front view of a second type of control pushbutton panel;
Figure 8 shows the basic diagram of a closed loop network comprising a plurality of pushbutton panels of the first type and a single pushbutton panel of the second type for the simultaneous or individual control of a plurality of roller shutters.

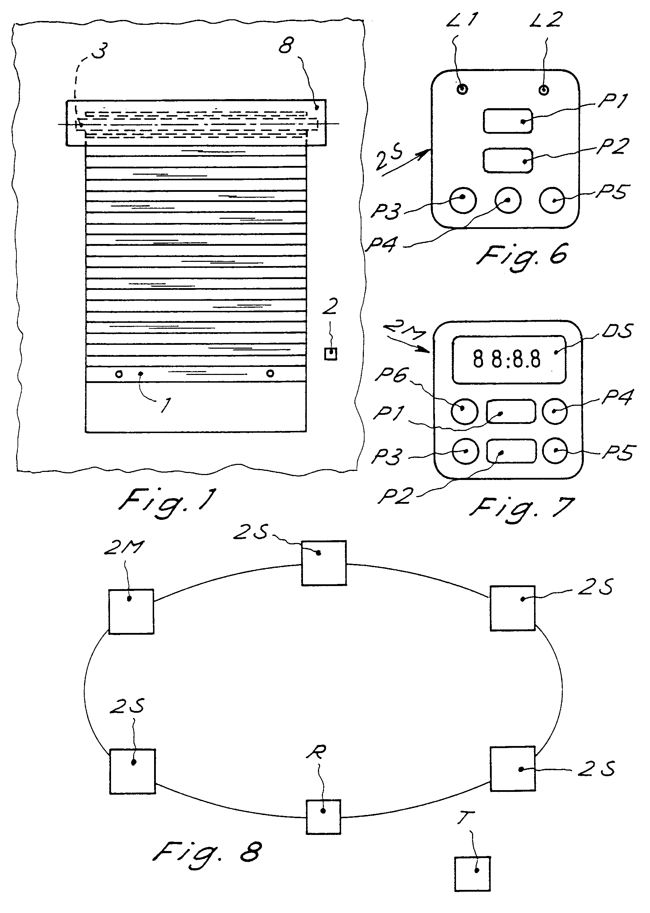

Figure 1 shows schematically a window fitted with a roller shutter 1 which can be controlled by a wall pushbutton panel 2.

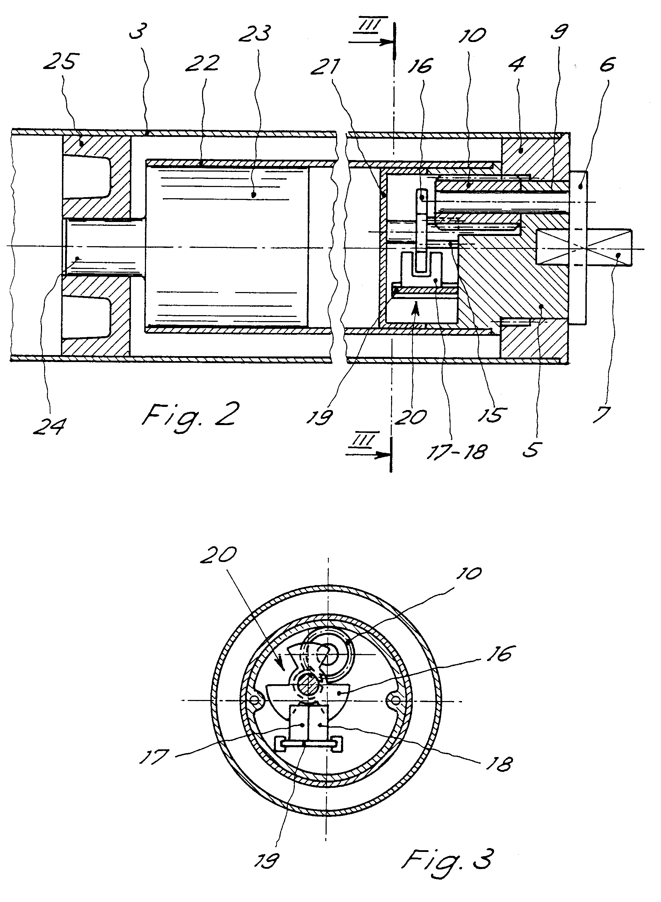

In a manner in itself known, the roller shutter is fixed and winds on a rotary drum 3 which, at each end, as shown in Figure 2, is attached to an internally cogged wheel 4 which rotates on a support 5 attached by means of a flange 6 and an anchoring pin 7 to an adjacent side wall of a roller shutter box 8.

Again as shown in Figure 2, the fixed support 5 holds a pin 9, whereon a gear 10 rotates, engaged at one end with the internal teeth of the cogged wheel 4 and at the other end with a pinion 15 which drives a radial segment rotary disk 16 (Figure 3) which, together with a pair of adjacent readers 17 and 18, mounted on a printed circuit board 19 attached to the support 5, forms an encoder 20, capable of generating two pulses, staggered in time, whenever one of the radial segments of the rotary disk 16 passes in front of one and the other readers 17 and 18, the time precedence of one or the other of the two pulses indicating the direction of rotation of the disk 16 and hence of the winding drum 3.

The encoder 20 is protected by a cover 21 attached to the support 5, which in turn is housed inside a fixed sleeve 22, which forms the container casing of a reversible electric ratiomotor 23, on whose output shaft 24 a pulley 25 is keyed, integral with the drum 3, which in this way is rotated by the ratiomotor 23.

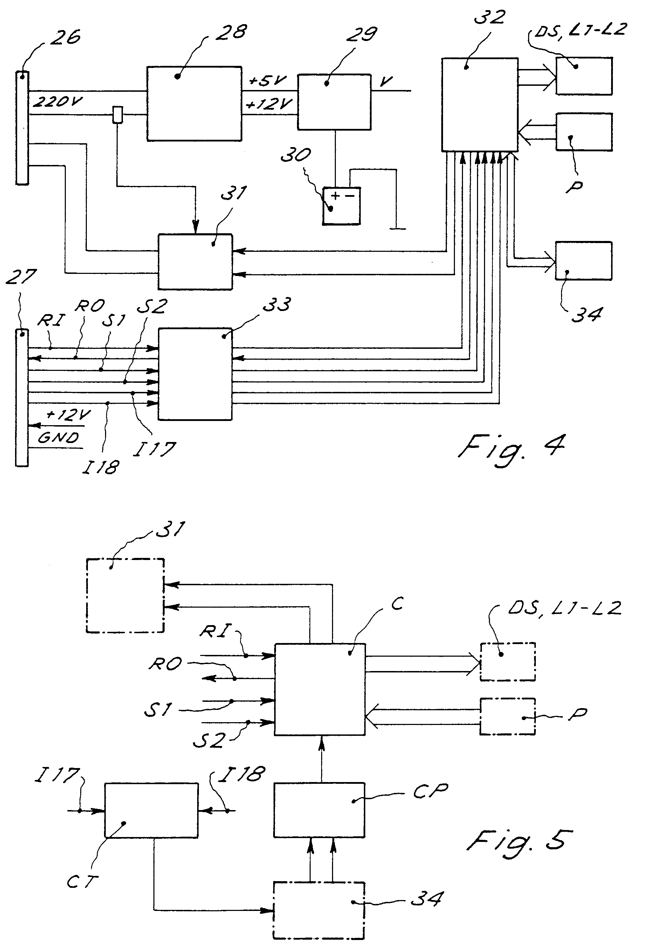

The circuit assembly of the control pushbutton panel 2 is shown schematically in Figure 4, in which it can be seen that a power connector 26 and a signals connector 27 are comprised.

The power connector 26 is connected to a power supply unit 28 which receives therefrom an electric power supply of 220 V in alternating current and transforms it into direct current power supplies at +5 V and +12 V, the first of which is supplied to a battery charger 29, which on the one hand charges a buffer battery 30 and on the other supplies a direct voltage supply V for a logic part of the pushbutton panel, which is to be described hereinunder. Also connected to the power connector is a motor driver 31, which is supplied in alternating current at 220 V and commands actuation of the ratiomotor 23 in one direction or the other.

The signals connector 27 has in turn a ground connection GND and a +12 V connection and is connected to the micropressor 32 via an interface 33 whereto or wherefrom a network input RI, a network output RO, the pulses I17 and I18 emitted by the readers 17 and 18 of the encoder 20 and further control signals S1 and S2 transmitted by possible external sensors, for example light detectors installed outside of the building, enter or exit.

The microprocessor 32 is connected bidirectionally to an EEPROM memory 34 and unidirectionally to a group of pushbuttons P contained in the pushbutton panel 2 and to a display DS or L1-L2 also contained in the pushbutton panel 2. It also supplies control signals to the motor driver 31.

The microprocessor 32 is designed to perform the functions outlined in Figure 5, that is to say a function CT of counting the pulses coming from the readers 17 and 18, a function CP of comparison between the result of the count deriving from function CT and a count prememorised in the memory 35 and a function C of control of the motor driver 31 on command of the pushbuttons P or of the signals R1, S1 and S2 and according to the result of this comparison.

The control pushbutton 2 can be produced in two versions, shown in Figures 6 and 7 respectively.

The simpler version is represented by the SLAVE device 2S shown in Figure 6, which has two central pushbuttons P1 and P2, for commanding the UP and DOWN movement of the shutter respectively, a further three pushbuttons P3, P4 and P5 for STOP, SET and ALL respectively, described hereinbelow, and two leds L1 and L2 of different colour light, for example green and red. The battery 30 of Figure 4 is not provided in the SLAVE device.

The more complex version is represented by the MASTER device 2M of Figure 7, which is distinguished from the SLAVE 2S device solely by the presence of the battery 30, an additional TIMER pushbutton P6 (and relevant clock circuits) and the use of a four-figure digital display DS in place of the two leds.

A single MASTER device 2M such as that in Figure 7 and a plurality of SLAVE devices 2S such as those in Figure 6 can be connected one to the other in a single closed loop network such as that in Figure 8 to allow the simultaneous and possibly timed control of the opening and closure of a plurality of shutters as an alternative to the individual control by means of a respective MASTER or SLAVE device. If required, the network may also comprise a receiver of infrared rays R for the remote control by means of a transmitter of infrared rays T.

The operation of the control system described above foresees the preliminary memorisation of the required positions of opening and closure and, in the case of the MASTER pushbutton panel in Figure 7, the additional preliminary memorisation of the time of opening and closure of the shutter.

The latter operation is performed on the MASTER device 2M, starting with regulation of the current day and time, which is actuated by keeping the TIMER pushbutton P6 pressed for more than two seconds. By then pressing the pushbutton P1 or P2, the current hour, which appears on the display DS, can be regulated, and then, after having pressed the TIMER pushbutton again, the day of the week can be regulated in the same way, and which again appears on the display DS. The procedure for regulation of the current hour is ended finally by pressing the TIMER pushbutton again.

To memorise the hour of opening and closure of the shutters the TIMER pushbutton P6 is pressed again, which shows on the display DS one or the other of two messages (for example PY and Pn) which indicate whether the timing of the opening and closure of the shutters is enabled or otherwise. By means of the pushbuttons P1, P2 the required situation is chosen, after which pressing of STOP P3 causes exiting from this phase of selection.

Assuming that enabling of timed opening and closure has been selected, pressing of the TIMER pushbutton allows the phase of determining the time of opening on the first day of the week to be entered. The time is set by first pressing the pushbutton SET P4 and then actuating the pushbuttons P1 and P2 until the display DS shows the required opening time for the first day. By pressing the TIMER pushbutton again and repeating actuation of pushbuttons P1 and P2, the required closure time for the first day is regulated in a similar manner. If required it is possible to select two pairs of opening and closure times for each day. Pressing the STOP P3 pushbutton allows this phase of regulation to be exited.

By pressing the TIMER pushbutton again the phase of enabling and regulation of timing for the second day is entered, which foresees the same operations described previously, or the ALL pushbutton P5 can simply be pressed, which repeats the settings of the first day for the second day.

The procedure is similar for the remaining days of the week and finally the STOP pushbutton is pressed to end programming of the times and return to normal working.

For the various MASTER 2M and SLAVE 2S devices it is also necessary to carry out a preliminary setting which allows the required positions of closure and opening of the shutters to be memorised.

The procedure for setting the MASTER device, and therefore of the respective shutter, is begun by keeping the pushbutton SET P4 pressed for more than two seconds. The display DS shows a first message, for example SET 1, which indicates that the position of closure of the shutter is being determined. By pressing for the necessary time the DOWN P2 pushbutton, the shutter is then brought into the required closure position, in particular into that of full closure (although it could be a different position), and the SET pushbutton is pressed, which allows memorisation in the EEPROM 34 of a count of pulses of the encoder 20 corresponding to the abovementioned closure position. The display DS then shows a second message, for example SET 2, which indicates that the position of opening of the shutter is being determined. By pressing the pushbutton UP P1, the shutter is then brought into the required opening position, which corresponds to a further count of the pulses of the encoder 20, which is memorised in the EEPROM 34. By pressing SET again, normal operation is restored.

The procedure for setting the SLAVE devices, and therefore the respective shutters, is virtually identical, except for the fact that the various operative phases are indicated this time by the leds L1 and L2, the first of which, normally lit, switches off, while the second, normally off, is switched on and after the closure position has been set, starts blinking until that of opening has been set.

Once the required positions of closure and opening have been set, the system is ready for repeating the movements of opening and closure of the shutters, both under the control of the pushbuttons P1 and P2 of the individual pushbutton panels, and under the centralised control, timed if necessary, of the the MASTER 2M device (in closed loop systems), and finally under the control of appropriate sensors which produce the signals S1 and S2 indicated in Figure 4.

From whatever part the command arrives, assuming that the shutter is at that moment in the closure position, the microprocessor 32 of the relevant pushbutton 2M or 2S transmits by means of the driver 31 of Figure 4 to the ratiomotor 23 of the shutter itself (Figure 2) an electric command of actuation which causes rotation of the winding drum 3 in the direction corresponding to the opening movement of the shutter. The rotation of the drum 3 causes the simultaneous rotation, at higher speed, of the radial segment disk 16 of the encoder 20 related thereto, with consequent generation of two sequences of pulses I17 and I18, staggered in time, by the readers 17 and 18. The staggering naturally depends on the identity of the reader encountered first by the various radial segments of the disk 16 and hence of the direction of rotation of the disk 16, which depends in turn on that of the drum 3 and hence on the fact that the shutter is in the phase of opening or closure. Henceforth, for greater clarity, it will be assumed that the movement of opening of the shutter causes a counterclockwise rotation of the disk 16, which therefore first encounters the reader 17 and then the reader 18, so that the pulses I17 generated by the first are staggered in advance in relation to the corresponding pulses I18 generated by the second.

The abovementioned pulses are gradually transmitted to the corresponding pushbutton panel 2 and more particularly to its microprocessor 32, which performs the function of counting CT by counting all the pulses of the sequence which reaches it first, in this case the pulses I17.

When the number of pulses counted reaches that corresponding to the predefined opening position which has been memorised in the EEPROM 34 during setting of the control system, the function CP of the microprocessor 32 detects the identical nature of the two counts and actuates the control function C of the same microprocessor so that, by means of the driver 31, the immediate stop of the ratiomotor 23 (appropriately equipped with a magnetic brake) is commanded.

If this takes place correctly, the shutter stops in the required opening position, from which it can later be moved by a similar procedure towards the closure position when required.

However, through inertia of the ratiomotor and/or settling of the shutter, the latter may rise beyond the opening position required and/or partially descend again, finally arranging itself above or below the aforementioned position.

In this case the encoder 20 continues to transmit the pulses I17 and I18, whose time sequence reverses at the time of the possible partial redescent of the shutter, which means that the segments of the rotating disk 16 this time encounter first the reader 18 and then the reader 17. At that point the microprocessor 32 counts the pulses I18 instead of the pulses I17, subtracting them from the previous count of the latter. The final number of pulses read and thus summed algebraically is finally stored in the EEPROM 34.

When the subsequent movement of closure of the shutter is commanded, the microprocessor 32 performs the comparison CP of the count memorised previously and of the one corresponding to the original setting of the required opening position, detecting a discrepancy between the two. The descent of the shutter is then commanded in order to take into account the count memorised last, so as to compensate the difference noted and allow the shutter to move into the exact predefined closure position.

The same naturally occurs if the incorrect positioning occurs at the end of the closure movement, in particular if the predefined closure position is different from that of full closure of the shutter.

In addition to the automatic functioning described above, the control system according to the invention naturally also allows a purely manual functioning, achieved by actuating as appropriate the various pushbuttons of the individual pushbutton panels 2. More particularly each shutter can be opened or closed individually, by pressing the relevant pushbutton P1 (UP) or P2 (DOWN) respectively, which causes the corresponding up or down movement of the shutter, provided the same is not already in the required position and no command to the contrary has been given by the signals S1 and S2 of the external sensors. In the case of a closed loop system, the manual command of the movement can be extended to all the shutters under control by pressing simultaneously the pushbuttons P1 (UP) and P5 (ALL) or P2 (DOWN) and P5 (ALL).

It is also possible to stop at any moment the automatic movement of the individual shutter, by pressing the pushbutton P3 (STOP) of the pushbutton panel corresponding to the shutter involved, if necessary simultaneously with the pushbutton P5 (ALL) if the movement of all the shutters of a closed loop system is to be stopped. Actuation of the pushbutton P3 can also be useful for positioning the shutters in an intermediate position between that of closure and opening established during the initial setting of the control system.

## Claims

1. Electronic control system for roller blinds and shutters mounted on a motorised rotary drum, comprising an encoder related to said rotary drum to emit a sequence of pulses indicating the angle of rotation of the drum between a closure position and an opening position of the roller blind or shutter and a control pushbutton panel with a memory suitable for receiving and counting the pulses emitted by the encoder to define and memorise required limit switch positions for subsequent movements of opening and closure of the roller blind or shutter, characterised in that the encoder (20) is made in such a way as to generate sequences of pulses (I17, I18) indicating both the angle and the direction of rotation of the drum (3) and the control pushbutton panel (2, 2M, 2S) comprises a microprocessor (32) which at each movement of opening or closure counts the pulses (I17, I18) of said sequences so as to subtract from the pulses relating to the commanded rotation any pulses relating to a contrary rotation, enters the result of said count in the memory (34) and, at the subsequent movement of closure or opening, compares it with a prememorised count indicating a required opening or closure position to command correspondingly said subsequent movement for a stroke which depends on the result of said comparison.

2. Control system according to claim 1, characterised in that said sequences of pulses (I17, I18) are staggered in time in one direction or the other according to the direction of rotation of said drum (3).

3. Control system according to claim 2, characterised in that said encoder (20) comprises a disk (16) made to rotate by said drum (3) and a pair of fixed adjacent readers (17, 18) encountered in sequence by said disk (16) during its rotation, so as to produce said sequences of pulses (I17, I18) staggered in time.

4. Control system according to claim 1, characterised in that said control pushbutton panel (2, 2M, 2S) comprises a group of pushbuttons (P) related to said microprocessor (32) to command the memorisation of said limit switch positions required and the subsequent automatic or manual actuation of said drum (3) and means of display (DS, L1, L2) controlled by said microprocessor (32) to display the arrangement and working status of the pushbutton panel.

5. Control system according to claim 4, characterised in that said control pushbutton panel (2, 2M, 2S) comprises inputs for control signals (S1, S2) transmitted by external sensors.

6. Control system according to claim 1, characterised in that it is made in the form of a closed loop network comprising a plurality of control pushbutton panels (2, 2M, 2S) for the same number of roller blinds or shutters, one of said control pushbuttons being of the MASTER type (2M) and the other control pushbutton panels being of the SLAVE type (2S), each SLAVE pushbutton panel comprising a group of pushbuttons (P1-P5) related to the microprocessor (32) to command memorisation of the limit switch positions required and the subsequent automatic or manual actuation of the winding drum (3) and luminous displays (L1, L2) controlled by said microprocessor (32) to display the working status of the pushbutton panel, and the MASTER pushbutton panel comprising said group of pushbuttons (P1-P5), a further pushbutton (P6) for memorising the times of actuation of the winding drum (3) and a digital display (DS) controlled by said microprocessor (32) to display the arrangement and the working status of the pushbutton panel.

7. Control system according to claim 6, characterised in that said MASTER and SLAVE pushbutton panels comprise inputs for control signals (S1, S2) transmitted by external sensors.

8. Control system according to claim 6, characterised in that said closed loop network also comprises a receiver (R) for remote control (T).
